# EUROPEAN PATENT SPECIFICATION

(11) **EP 1 310 167 B1**
(45) Date of publication and mention of the grant of the patent: **07.09.2005**
(21) Application number: 03002287.5
(22) Date of filing: 14.04.1998
(51) Int. Cl.: A01K 75/00, A01K 73/04, D04C 1/12

(54) **Thread for fishing net and fish catching methods**
Faden für Fischnetz und Fischfangverfahren
Fil pour filet de pêche et procédé de pêche

(30) Priority: 14.04.1997 US 43618 P
(43) Date of publication of application: 14.05.2003
(62) Divisional of application: 98918416.3
(73) Proprietor: OTTER Ultra-Low-Drag, Ltd., Cayman Islands (KY)
(72) Inventor: Safwat, Sherif, Davis, CA 95615 (US); Perevoshchikov, Valentin, G., Kaliningrad, 236040 (RU)
(74) Representative: Tranter, Andrew David

(56) References cited:
- US-A- 2 949 807
- US-A- 3 059 518
- PATENT ABSTRACTS OF JAPAN vol. 014, no. 330 (C-0741), 16 July 1990 (1990-07-16) & JP 02 118171 A (MITSUI CONSTR CO LTD), 2 May 1990 (1990-05-02)

## Description

### Technical Field

The present invention relates to an improved thread design for a trawl system (that by definition is iterated or cloned in varying geometric patterns) providing improved shaping and performance, especially when incorporated in mid-water or bottom trawls of such systems.

### Background Art

It is well understood that the basic cell of a selected portion of every trawl system is the unit cell (called mesh cell hereinafter). The selected portions of the trawl system is then built by repeating the shape of the basic mesh cell.

It is axiomatic that the ability to predict the overall shape and performance of the finished product depends entirely on the shape and structural integrity of that single basic mesh cell. Heretofore, proper trawl making was a two-step process that involved initial construction of undersized mesh cells, and setting the knots and mesh sizes by the substeps of depth stretching and heat setting involving turning the finished mesh in direction opposite to its natural bent and applying first pressure, and then heat to set the knots.

Materials used in mesh cell construction can be plastics such as nylon and polyethylene but other types of natural occurring fibers also can be (and have been) used. Single, double (or more) strands make up a thread or twine composed of, say, nylon, polyethylene and/or cotton. Additionally, in making the mesh portion of conventional trawls particularly mid-water trawls especially the forward section mesh portion thereof, braided cords and twisted ropes of natural and synthetic materials, bonded and unbonded, and cables have been used. However, the pitch of any braided or twisted thread, such as a twine, cord and/or rope (distance between corresponding points along one of the strands constituting one turn thereof which is analogous to the pitch between corresponding screw threads) either has usually been small, or has produced shallow or narrow depressions. Conventional trawl making practices balance the towing force generatable by a vessel against the largest possible trawl for a particular fishing condition, i.e. a trawl having the minimum possible drag. Thus, conventional trawl makers are taught to use the smallest possible diameter twine to reduce drag. Accordingly, meshes in conventional trawls, and especially the mesh of the forward sections of mid-water trawls, have been made of twines, including conventional three strand twisted twines of any pitch including loose pitch, that have relatively shallow or narrow and uniform spiral depressions, or smaller diameter braided twines having an equivalent breaking strength. Moreover, modern manufacturing processes using threads, such as twines, cords, cables or ropes to form mesh cells, have always been designed to produce mesh cells in which twist direction of the individual bars comprising each mesh cell, if any, is always the same. None have proposed the systematic and regular use of differently oriented twist for individual mesh bars of the mesh cell in the manner of the present invention.

Even though various Japanese Patent Applications superficially describe mesh cells for nets in which mesh bars have differing lay directions, (see for example, Jap. Pat. Apps. 57-13660, 60-39782 and 61-386), the mesh bars employ conventional, essentially smooth twine or rope. The patent applications disclose differing lay directions of conventional, essentially smooth twine or rope for balancing residual torque within the net structure during its deployment and use, not for generating lift that enhances of trawl system performance. The first-mention Application, for example, states that its purpose is to provide "net legs with different twist directions according to a fixed regular pattern so that torsion and torque of said net legs are mutually cancelled." The use of conventional, essentially smooth twine or rope will not yield substantial lift any different from conventional nets.

As set forth in published Patent Cooperation Treaty ("PCT") International Patent Application, International Publication Number WO 97/13407, International Publication Date 17 April 1997, ("the PCT patent application") it has been recently discovered that threads, such as twines, cords, braided cords, cables, ropes or straps, may be advantageously twisted, during assembly of trawl net meshes into a loose, corkscrew-shaped pitch establishing helical grooves that are deeper and/or broader than the depressions in conventional tightly or loosely twisted multistrand ropes or cables making up conventional mesh bars. During field operations in a water entrained environment, properly orienting mesh bars having the loose, corkscrew-shaped pitch produces lift that increases a performance characteristic of a trawl system such as increased trawl volume (particularly in shallow water) in comparison with a trawl made from conventional mesh, improved trawl shape, and reduced vibration, noise, and drag. Trawl performance improves even though, contrary to conventional trawl design, mesh bars having the loose, corkscrew-shaped pitch have a diameter (or shadow area) larger than corresponding mesh bars of a conventional trawl.

During the course of examination at the European Patent Office, the Examiner has required the insertion of references to two prior published US patents, namely US2949807 and US3059518. US2949807 discloses a fishing net whose mesh bars are formed from braided plastic filaments. US3059518 discloses a shoe lace made by braiding together at least three elastic strands of which at least one has a diameter different from the other strands: no information is given as to the construction of the individual strands, though the drawings are consistent with strands formed from a rubber core enclosed in a woven textile sheath.

### Disclosure of Invention

An object of the present invention is to provide further improvements relating to trawl systems.

Yet another object of the present invention is to provide trawl systems having improved performance characteristics.

According to a first aspect of the present invention there is provided a thread which includes an encircling braided sheath and a core, the sheath being characterised in that it has:
A a plurality of encircling product strands each having a smaller diameter than a diameter of core product strand of the thread; and
B at least one spiralling product strand interwoven with the encircling product strands and having a diameter that is larger than the diameter of each of the encircling product strands and is less than the diameter of the core product strand.

The invention extends to an improved method for catching fish with a trawl system including the steps of:
A assembling the trawl system by combining components selected from a group consisting of a trawl, upper bridles and frontropes, the trawl including a plurality of mesh cells, each mesh cell including at least three mesh bars:
   i at least one portion of at least a first mesh bar in at least one of the mesh cells being characterised in that it includes a first product strand according to the first aspect of the invention enclosed within a sheath that resists sliding along the core product strand during assembly and field operations of the trawl; and
   ii a mechanical connection couples the first product strand forming the first mesh bar to a second product strand forming a second mesh bar of he at least one mesh cell, the mechanical connection being characterised by a clamp which encloses a portion of at least the first product strand; and
B from a vessel disposed on a surface of a body of water:
   i deploying into the body of water as part of the trawl system the sheathed, first mesh bar; and
   ii propelling at least the sheathed, first mesh bar through the body of water

As disclosed in the PCT patent application, individual bars of a mesh cell can be formed to act as mini-hydrofoils in field operations. During field operations in a water entrained environment, the trawl disclosed in the PCT patent application becomes disposed symmetrically about a central axis. The disclosed trawl includes a plurality of mesh cells, each mesh cell having at least three mesh bars. Each mesh bar in the trawl intersects with at least one other mesh bar. During field operations with the trawl in a water entrained environment, at least a portion of at least one of the mesh bars of at least one of the mesh cells in the trawl exhibits a substantial hydrofoil-like effect that aids in increasing a performance characteristic of a trawl system. That portion of mesh bars comprising threads in accordance with the present invention which exhibit a substantial hydrofoil-like effect is preferably formed from a material that has a substantially incompressible cross-sectional shape, is offset from the central axis of the trawl, and is formed with a hydrofoil shape that:
1. has a lay with a loose, corkscrew-shaped pitch establishing a corkscrewing groove that provides cambered sections; and
2. is oriented to establish leading and trailing edges for that portion of mesh bars which exhibit the hydrofoil-like effect.

The lay of that portion of mesh bars which exhibit the hydrofoil-like effect has an orientation relative to a receding direction, and the leading edge for that portion of mesh bars which exhibit the hydrofoil-like effect, when normalized to the receding direction relative to the central axis, resides at a side of the mesh bar. Pairs of lay and the leading edge are selected for mesh bars from a group consisting of:
1. a left-hand lay, and the leading edge being a right side of the mesh bar as viewed in the receding direction; and
2. a right-hand lay, and the leading edge being a left side of the mesh bar as viewed in the receding direction.

If the lay and leading edge are selected from the preceding group, then movement of the mesh bar comprising a thread in accordance with the present invention through the water entrained environment relative to a water flow vector that is neither parallel nor perpendicular to the mesh bar creates a pressure differential across that portion of mesh bars which exhibit the hydrofoil-like effect. The pressure differential thus created across such mesh bars establishes a lift vector relative to the central axis of the trawl, most commonly directed away from the central axis of the trawl. Consequently, the lift vector created by movement of the mesh bars which have a portion that exhibits the hydrofoil-like effect increases the performance characteristic of the trawl which is selected from a group consisting of substantially increased trawl volume (particularly in shallow water) in comparison with a trawl made from conventional mesh, improved trawl shape, and reduced vibration, noise, and drag.

Various other uses of a thread according to of the present invention further improve the performance of trawl systems. Thus, properly controlling the shape, arrangement, and distribution of strands assembled to form a mesh bar further improves a trawl. The proper pitch for the loose, corkscrew-shape is advantageously controlled so the pitch of each mesh bar is in a range of 3d to 70d, with a range of 5d to 55d being preferred, where d is:
1. for a pair of twisted strands forming a mesh bar, the diameter of the smaller strand of the pair; or
2. for mesh bars that include more than a pair of twisted strands or strands of differing diameters, the diameter of the next-to-largest diameter twisted strand.
Within the preferred pitch range, a pitch of 5d to 15d generally produces maximum lift for mesh bars formed from product strands, while a pitch of 25d to 55d generally produces minimum drag for mesh bars formed from product strands.

These and other features, objects and advantages will be understood or apparent to those of ordinary skill in the art from the following detailed description of the preferred embodiment as illustrated in the various drawing figures.

### DEFINITIONS

MESH is one of the openings between threads, ropes or cords of a net.

MESH CELL means the sides of a mesh and includes at least three sides and associated knots or equivalent couplers oriented in space. A quadratic mesh cell has four sides with four knots or couplers, and is usually arranged to form a parallelogram (including rectangular and square), with diamond-shaped mesh (trawl mesh) being preferred. A triangular mesh cell has three sides and three knots or couplers. A hexagonal mesh cell has six sides and six knots or couplers.

MESH BARS means the sides of a mesh cell.

CELL means a trawl construction unit, fishing net or the like and includes both a mesh cell relating to enclosable sides of the mesh of the trawl or net itself, as well as to upper bridle and frontropes used in towing the trawl or net through a water column to gather marine life.

CELL BAR means both the sides of a mesh cell and the elements that make up the upper bridle, frontropes and tow lines.

RIGHT- AND/OR LEFT-HANDEDNESS IN A RECEDING DIRECTION along a cell bar involves establishing a central axis for the trawl, net or the like to which the mesh cell associated with the cell bar belongs. Then a normalized imaginary giant stick figure, that is depicted in FIGs. of the PCT patent application, is positioned so his feet intersect the central axis, are rotatable about the central axis, his body penetrates through the cell bar, and his back is positioned perpendicular to and first intersects the water flow vector for the moving trawl, net or the like. The right- and/or left-handedness of the cell bar is then determined using the location of either his right or his left arm irrespective of the fact that the position of the cell bar is offset from the central axis.

THREADS are composed of synthetic or natural fibers. Firstly, for the present invention a thread can comprise two strands twisted along the longitudinal axis of symmetry in a loose fashion with a pitch in a range of 3d-70d, where d is:
1. for a pair of twisted strands forming a mesh bar, the diameter of the smaller strand of the pair; or
2. for mesh bars that include more than a pair of twisted strands or strands of differing diameters, the diameter of the next-to-largest diameter twisted strand.
Or secondly, for the present invention a thread can comprise a extruded, woven, braided, or plaited strap that is twisted along its longitudinal axis of symmetry in a loose fashion with a pitch in a range of 3d-70d, where d is the width of the strap.

STRAP is a flexible element of synthetic or natural fibers that forms a mesh bar, the strap having a cross-section that is generally rectangular or can be quasi-rectangular with rounded short sides and elongated long sides with or without camber. In operation, the strap acts as a hydrofoil, preferably twisted along its longitudinal axis, wherein the short sides form interchanging leading and trailing edges.

PRODUCT STRAND includes the synthetic or natural fibers or filaments used to form the construction unit of the invention which is preferably, but not necessarily, the product of a conventional manufacturing process, usually made of nylon, polyethylene, cotton or the like twisted in common lay direction. Such strand can be twisted, plaited, braided or laid parallel to form a sub-unit for further twisting or other use within a mesh bar or a cell bar in accordance with the invention.

NET is a meshed arrangement of threads that have been woven or knotted or otherwise coupled together usually at regular intervals or at intervals that vary usually uniformly along the length of the trawl.

TRAWL is a large net generally in the shape of a truncated cone trailed through a water column or dragged along a sea bottom to gather marine life including fish.

CODEND is a portion of a trawl positioned at the trailing end thereof and comprises a closed sac-like terminus in which the gathered marine life including fish are trapped.

FRAME is a portion of the larger sized meshes of a net or trawl upon which is overlaid (and attached by a binding) a netting of conventional twist.

PANEL is one of the sections of a trawl and is made to fit generally within and about frames shaped by riblines offset from the longitudinal axis of symmetry of the trawl.

PITCH is the amount of advance in one turn of one product strand twisted about another product strand (or strands) when viewed axially, or common advance of the twist of a strap along its axis of symmetry. For product strands, pitch values are determined with respect to the diameter of the next-to-largest product strand. For straps, pitch values are determined with respect to the width of the strap.

LAY is the direction in which the strands or the strap wind when viewed axially and in a receding direction.

INTERNAL LAY OR TWIST is the direction in which synthetic or natural fibers comprising each product strand are wound when such strand is viewed axially and in a receding direction.

INTERNAL BRAID describes the method of formation of a particular product strand.

FRONTROPE(S) is a term that includes all lines located at perimeter edge of the mouth of the trawl, net or the like, such as headrope, footrope (or bottomrope) and breast lines. The frontropes have a number of connections relative to each other and to the bridle lines.

BRIDLES relates to lines that intersect the frontropes and attach to the tow lines. For a particular port or starboard tow line, a pair of bridles extend from a common connection point therewith, back to the frontropes.

TRAWL SYSTEM is a term that includes the trawl, net or the like in association with the tow lines therefor as well as the bridles lines.

### Brief Description of Drawings

FIG. 1 is a illustrative side view of a trawl system depicting a mid-water trawl being towed by a vessel;
FIG. 2 is a detail top view of the trawl of FIG.1;
FIG. 3 is a fragmentary enlargement of a mesh cell included in the trawl depicted in FIGs. 1 and 2;
FIG. 4 is a cross-section taken along line 4-4 of FIG. 3 illustrating one possible configuration for product strands that form mesh bars of the mesh cell;
FIGs. 5, 6 and 7 are sections akin to that depicted in FIG.
4 illustrating various alternative configurations of product strands;

FIGs. 8a through 8c are plan views illustrating various different configurations for corkscrew-shaped product strands; and

FIG. 9 is a plan view of a mesh bar in which one product strand spirals around another product strand.

### Best Mode for Carrying Out the Invention

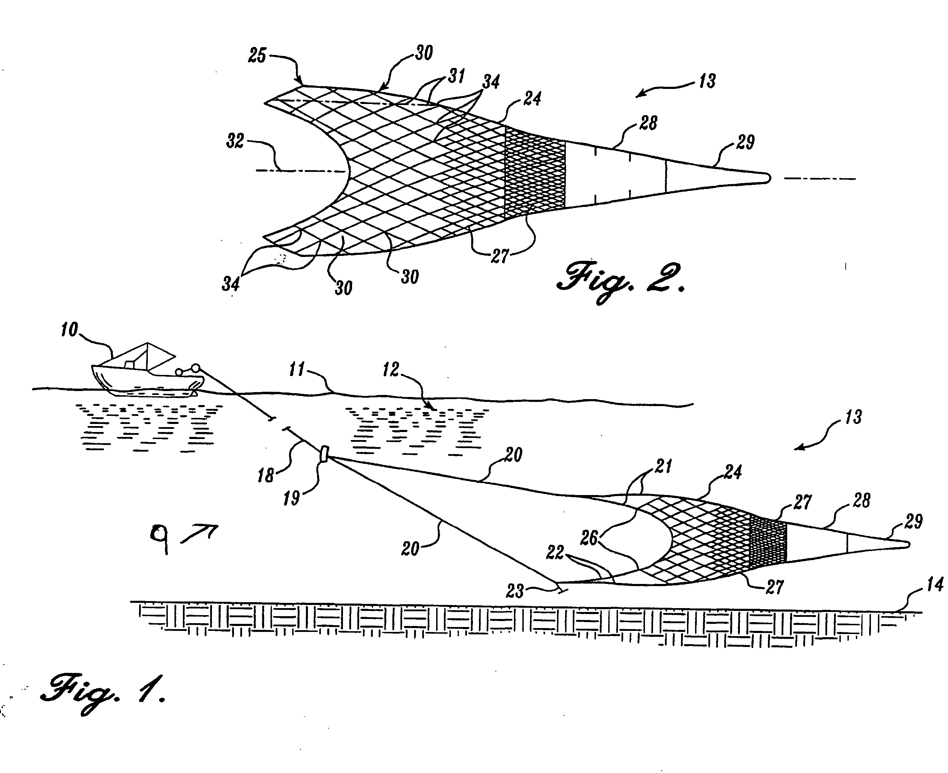

Referring to FIG. 1, a towing vessel 10 at a surface 11 of a body of water 12, tows a mid-water trawl 13 of a trawl system 9. The trawl 13 is positioned between the surface 11 and an ocean bottom 14. The trawl 13 can be connected to the towing vessel 10 in many ways, such as by a main towing line 18 connected through door means 19, towing bridles 20 and mini-bridles 21, 22. A series of weights 23 is attached to mini-bridle 22. Likewise, the shape and pattern of the trawl 13 can vary as is well known in the art. As shown, the trawl 13 has a forward section 24 that includes forward projecting wings 25 for better herding at mouth 26. The forward section 24, including wings 25, is seen to define a mesh size that is larger than that used for a mid-section 27, back-end 28, or codend 29 of the trawl 13.

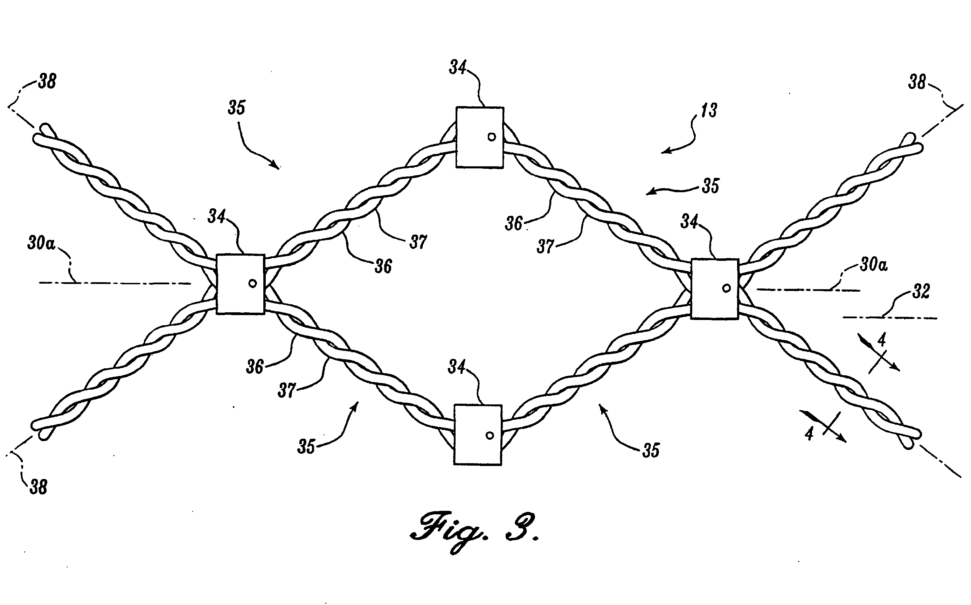

FIG. 2 illustrates the wing 25 of the trawl 13 of FIG. 1 in more detail and includes a series of mesh cells 30 of quadratic cross-section that are part of panel 31 and are offset from axis of symmetry 32 of the trawl 13. The size of mesh cells 30 is determined by a distance between adjacent knots or equivalent couplers 34. Different sections of the trawl 13, and even different regions within a section, use different size mesh cells 30, which generally form a repeating pattern within that section or region of a section.

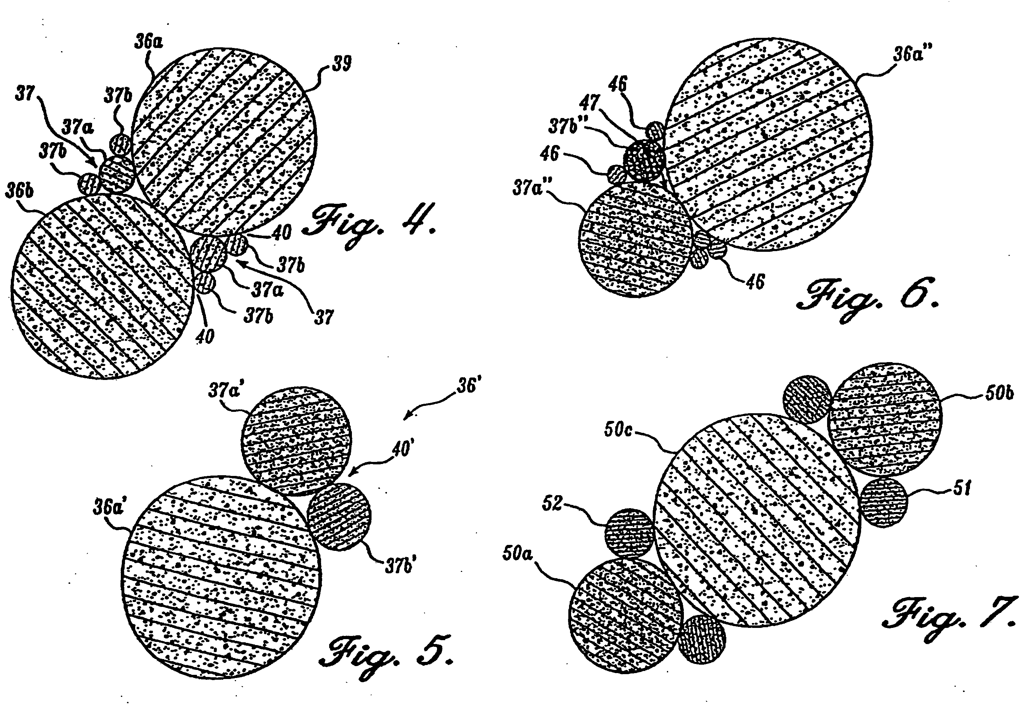

As shown in FIG. 3, the mesh cells 30 each have a longitudinal axis of symmetry 30a, and are formed of a series of mesh bars 35 that include several product strands 36, 37. As explained in greater detail below, the product strands 36, 37 may be twisted about a common axis of symmetry 38 in either one of two lay directions: clockwise or counterclockwise as viewed axially along common axis of symmetry 38 and in a receding direction established upstream of the trawl 13. Forming the cork-screw shape of the mesh bars 35 is described in the PCT patent application.

As indicated in FIGs. 1 and 2, the length of mesh bars 35 varies along the length of the trawl 13. For example, the mesh bars 35 in the forward section 24 have a length of at least 10 ft (304.8 cm). Alternatively, the mesh bars 35 in the mid-section 27 of the trawl 13 have length between 10 ft. (304.8 cm) and 0.75 ft (22.86 cm). The mesh bars 35 of the back-end 28 have a length less than 0.75 ft (22.86 cm).

FIG. 4 shows one configuration for the product strands 36, 37 in greater detail. As shown, the product strands 36, 37 vary in diameter wherein principal product strands 36a, 36b are of a larger, equal diameter than auxiliary product strands 37 located in recesses 40 formed between the principal product strands 36a, 36b. Such auxiliary product strands 37 each consists of a product strand 37a of smaller diameter than product strands 36a, 36b sandwiched between a pair of even smaller diameter auxiliary product strands 37b. The larger product strands 36a, 36b have outer surfaces 39 in tangential contact with each other along a single, three dimensional contact curve. The product strands 37 tangentially contact the outer surfaces 39 of the larger product strands 36a, 36b at locations offset from that of the latter. The configuration depicted in FIG. 4 produces a hydrofoil section having surprisingly superior results in operations.

FIGs. 5, 6 and 7 show variations of the invention akin to that depicted in FIG. 4.

FIG. 5 illustrates a variation on the number and shape of the product strands 36, 37. That is, a single larger product strand 36a' can be mounted in tangential contact with smaller strand 37a' with a still smaller strand 37b' located in recesses 40' therebetween.

FIG. 6 illustrates another variation from the configuration depicted in FIG. 5 which adds additional auxiliary product strands 46 of even smaller diameter than those of unequal diameter principal and intermediate product stands 36a", 37a" at tangential positions within recesses 40". That is, such product strands 46 are located in the two recesses 40" formed adjacent to a single tangential contact point 47 between the product stands 36a", 37a".

As shown in FIG. 7, the number, orientation and size of product strands, generally indicated at 50 has changed. Two smaller product strands 50a, 50b of equal diameter sandwich a larger diameter product strand 50c. The product strands 50a, 50b and 50c establish recesses 51 which receive a plurality of much smaller diameter product strands 52. The cross-sectional shape depicted in FIG. 7, even though formed from product strands, approaches that of a strap that will be discussed in greater detail herein below. As a cross-sectional shape of combined product strands approaches that of a strap, parameters for straps, rather than for product strands, should be used in designing the trawl.

It should be pointed out that product strands are synthetic or natural fibers or filaments which are preferably but not necessarily the product of a conventional manufacturing process, usually made of nylon, polyethylene, cotton or the like twisted in common lay direction. Such strand can be twisted, plaited, braided or laid parallel to form a sub-unit for further twisting or other use within mesh bars 35 in accordance with the teachings of the present invention and the PCT patent application. In general, bonded product strands exhibit significantly greater lift, e.g. a 1.3 to 1.7 or greater increase in lift, than unbonded product strands of identical diameter. To minimize drag while maximizing lift a densely laid, heat set and bonded product strand, densely braided product strand, or strap, each of which has a substantially incompressible cross-sectional shape and a somewhat roughened surface, is preferred for preserving, during and after assembly of the trawl 13 or 263 , the profile and configuration of the mesh bars 35 and 283, as well as that of the cambered sections created by the loose, corkscrew-shape, particularly upon application of tensile forces to mesh bars 35 and 283. Alternatively, in applications where maximizing lift is a primary consideration and breaking strength and drag requirements are easily satisfied, bonding may be used to make product strands or straps substantially incompressible while reducing manufacturing cost. Bonding resists a tendency for product strands or straps to compress during assembly and field operations, and therefore better preserves designed hydrofoil characteristics of the mesh bars 35 and 283. Variations in applying a bonding material during assembly of mesh bars 35 further permits controlling their external shape and filling gaps between product strands. A urethane polymeric material, or material having similar properties, is adequate as a bonding material.

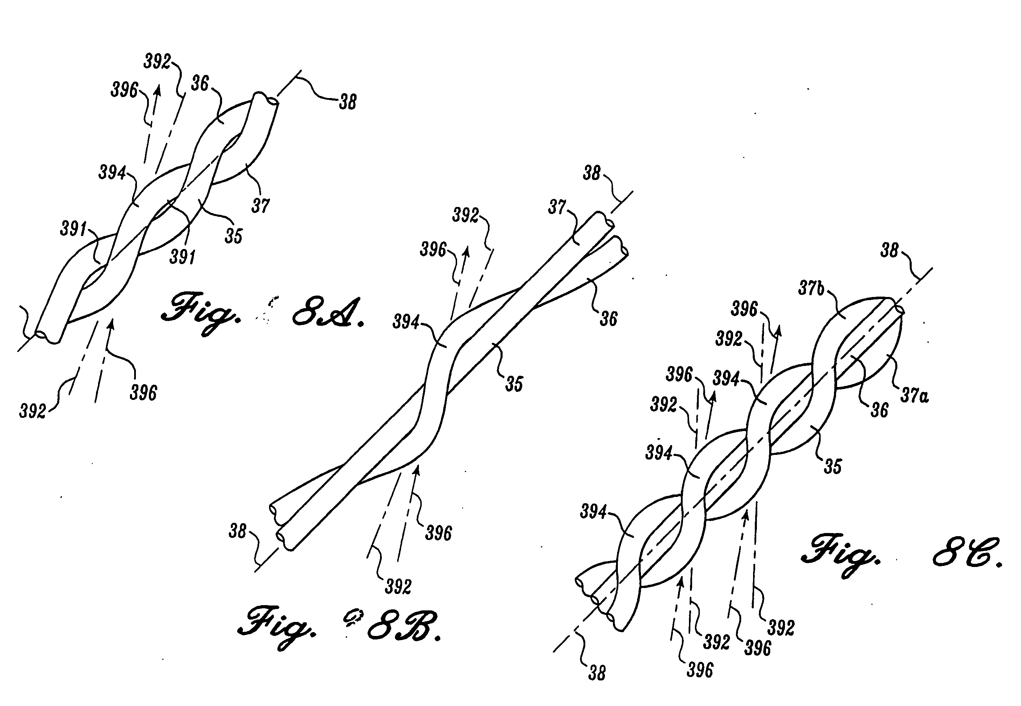

FIGs. 8a through 8b depict various different configurations for mesh bars 35 having the loose, corkscrew-shaped pitch that establishes deep grooves 391 formed by the corkscrewing of the product strands 36, 37. In the illustration of FIG. 8a, the product strands 36, 37 twist equally about the common axis of symmetry 38, and a dashed line 392 indicates a cutting plane along a cambered section 394 of the mesh bar 35. In that FIG., an arrowed line 396 indicates a possible direction of a water flow vector past the mesh bar 35. A narrowest width of cork-screw-shaped mesh bars 35 having the configuration illustrated in FIG. 28a at a bottom of grooves 391 measured parallel to the direction of the groove with a conventional vernier caliper approaches a diameter of the largest product strand 36 or 37 as the pitch increases, and a widest width at the cambered section 394 is substantially equal to a sum of diameters of the product strands 36 and 37.

While for maximizing lift and minimizing drag there exists an ideal orientation for the dashed line 392 indicating the cambered section 394 with respect to the arrowed line 396 indicating the water flow vector, the present invention permits engineering a trawl 13 having nearly maximum lift while minimizing drag even though the angular relationship between the dashed line 392 and the arrowed line 396 varies. Thus, the arrowed line 396 may be parallel to the dashed line 392, or may be skewed at an angle on either side of the dashed line 392 as will likely occur due to flexing of the mesh cells 30 of the trawl 13 during field operations in a water entrained environment. However, in assembling the trawl 13 or 263 the loose, corkscrew-shaped pitch of the mesh bars 35 is engineered to properly orient the dashed line 392 indicating the cambered section 394 with respect to the anticipated orientation of arrowed line 396 indicating the water flow vector depending upon the location of a mesh cell 30 or 280 within the trawl 13, and upon the hydrodynamic characteristics of particular product strands 36, 37 or straps 284 assembled into the mesh bars 35 or 283.

FIG. 8b depicts a configuration for the product strands 36, 37 in which the product strand 36 spirals around the product strand 37 which is aligned coaxially with the common axis of symmetry 38. Similar to the illustration of FIG. 8a, the dashed line 392 in FIG. 8b indicates the cutting plane through the mesh bar 35 along the cambered section 394 of the mesh bar 35, and the arrowed line 396 indicates a possible direction of the water flow vector past the mesh bar 35. Also similar to the mesh bar 35 depicted in FIG. 8a, the narrowest width of corkscrew-shaped mesh bars 35 having the configuration illustrated in FIG. 8b at a bottom of grooves 391 measured parallel to the direction of the groove with a conventional vernier caliper approaches a diameter of the largest product strand 36 or 37, and the widest width at the cambered section 394 is substantially equal to the sum of diameters of the product strands 36 and 37. FIG. 8c depicts a configuration for product strands 36, 37 in which the a pair of product strands 37 spiral around the product strand 36 which is aligned coaxially with the common axis of symmetry 38. Similar to the illustration of FIGs. 8a and 8b, a pair of dashed lines 392 in FIG. 8c indicate cutting planes through the mesh bar 35 that pass through cambered sections 394, and a pair of arrowed lines 396 indicate possible directions for the water flow vector past different locations along the mesh bar 35. In the forward section 24 of the trawl 13, each mesh bar 35 made of product strands includes a series of at least thirty-five (35) cambered sections 394. In the forward section of the trawl 263, each mesh bar 283 made of straps 284 includes a series of at least twenty-five (25) cambered sections.

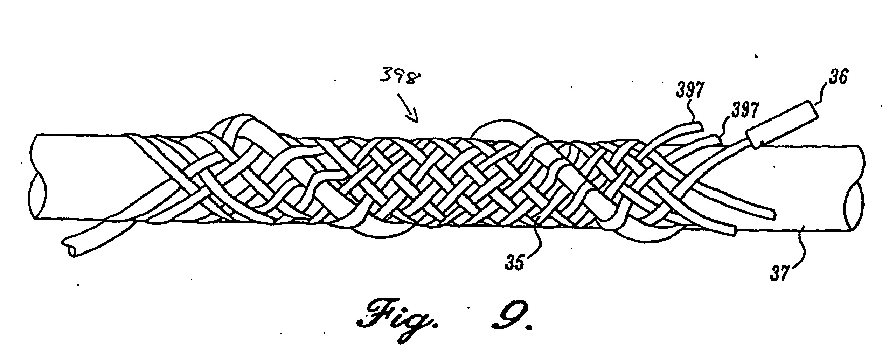

One characteristic of the mesh bar 35 depicted in FIG. 8a-8c is that field operations in a water entrained environment applies a force that urges the product strand 36 to slide along the product strand 37. FIG. 9 depicts a configuration for such a mesh bar 35 which prevents the product strand 36 from sliding along the product strand 37 by including the product strand 36 among strands 397 of a conventional braided sheath 398 that encircles the product strand 37.

### Industrial Applicability

For many applications, various of the structures described above for the mesh bars 35 and 283 may be selected for assembly and arranged to form the trawl 13 or 263 so that lift generated by mesh bars 35 or 283 is directed substantially uniformly away from the axis of symmetry 32 or 281 of the trawl 13 or 263. This configuration for the mesh bars 35 or 283 yields maximum trawl volume. However, for other fishing conditions the orientation and design of the mesh bars 35 or 283 may be arranged so cumulative lift created by the mesh bars 35 or 283 of the bottom panel of the trawl 13 or 263, while directed away from the axis of symmetry 32 or 281 of the trawl 13 or 263, exhibits a lesser magnitude than cumulative lift created by the mesh bars 35 or 283 of the top panel. In this latter configuration, the trawl 13 or 263 exhibits a net upward lift toward the surface 11 or 261 of the body of water 12 or 262.

## Claims

1. A thread which includes an encircling braided sheath (398) and a core (37), the sheath **characterized in that** it has:
a. a plurality of encircling product strands (397) each having a smaller diameter than a diameter of core product strand (37) of the thread; and
b. at least one spiraling product strand (36) interwoven with the encircling product strands (397) and having a diameter that is larger than the diameter of each of the encircling product strands (397) and is less than the diameter of the core product strand (37).

2. The thread of claim 1 wherein the thread has a substantially incompressible cross section.

3. The thread of claim 1 or 2 wherein the spiraling product strand has a substantially incompressible cross section.

4. The thread of claim 1 or 2 wherein the thread has a cross section capable of maintaining a shape during field operations.

5. The thread of claim 1 or 2 wherein the braided sheath (398) is capable of maintaining its shape during field operations.

6. The thread of claim 1 or 2 wherein the spiraling product strand (36) has a cross section capable of maintaining a shape during field operations.

7. The thread of claim 1 or 2 wherein the thread is mechanically secured to another object by a clamp.

8. The thread of claim 1 or 2 wherein a loop is formed in the thread for securing the thread to another object, the loop being formed by two segments of the thread that are mechanically secured to each other by a clamp.

9. An improved method for catching fish with a trawl system including he steps of:
a. assembling the trawl system by combining components selected from a group consisting of a trawl, upper bridles and frontropes, the trawl including a plurality of mesh cells, each mesh cell including at least three mesh bars (35, 283):
i. at least one portion of at least a first mesh bar in at least one of the mesh cells **characterized in that** it includes a first product strand being a thread according to anyone of claims 1 to 8 and having a core product strand (37) enclosed within a sheath (398) that resists sliding along the core product strand (37) during assembly and field operations of the trawl; and
ii. a mechanical connection couples the first product strand forming the first mesh bar to a second product strand forming a second mesh bar of the at least one mesh cell, the mechanical connection being
**characterized by** a clamp which encloses a portion of at least the first product strand; and
b. from a vessel disposed on a surface of a body of water:
i. deploying into the body of water as part of the trawl system the sheathed, first mesh bar; and
ii. propelling at least the sheathed, first mesh bar through the body of water.

10. The improved method for catching the fish of claim 9 wherein the slide-resistant, sheathed portion of the first product strand is further **characterized in that**:
the sheath is formed with a plurality of product strands (397) which both encircle and have a smaller diameter than the core product strand (37), at least several of the encircling product strands (397) that are disposed within the clamp being further **characterized by** being sufficiently densely woven that the sheath resists movement relative to the core product strand.

11. The improved method for catching fish of claim 9 wherein the slide-resistant, sheathed portion of the first product strand is further **characterized in that**:
the sheath is formed with a plurality of product strands (397) which both encircle and have a smaller diameter than the core product strand (37), at least several of the encircling product strands (397) that are disposed within the clamp being further **characterized by** being sufficiently densely woven that the sheath maintains a cross sectional shape of the slide-resistant, sheathed portion of the first product strand during field operations.

12. The improved method for catching fish of claim 9, 10 or 11 wherein coupling the first product strand to the second mesh bar includes forming a first loop by clamping together two segments of the first product strand.

13. The improved method for catching fish of claim 12 wherein coupling the first product strand to the second mesh bar includes forming a second loop at an end of the second product strand, and wherein the second loop passes through the first loop.

14. The improved method for catching fish of claim 9, 10, 11, 12 or 13 wherein the core product strand is formed with substantially minimum residual torque.

15. The improved method for catching fish of claim 9, 10, 11, 12 or 13 wherein the slide-resistant, sheathes portion of the first product strand is formed with substantially minimum residual torque.

## Patentansprüche

1. Garn, welches eine geflochtene Ummantelung (398) und einen Kern (37) enthält, wobei die Ummantelung **dadurch gekennzeichnet ist, dass** sie aufweist:
a. mehrere umgebende Produktfäden (397), die jeweils einen kleineren Durchmesser als der Kern-Produktfaden (37) des Garns aufweist; und
b. mindestens einen spiralförmig verlaufenden Produktfaden (36), der mit den umgebenden Produktfäden (397) verwoben ist und einen größeren Durchmesser besitzt als jeder der umgebenden Produktfäden (397) und einen kleineren Durchmesser besitzt als der Kern-Produktfaden (37).

2. Garn nach Anspruch 1 mit einem im Wesentlichen nicht komprimierbaren Querschnitt.

3. Garn nach Anspruch 1 oder 2, bei dem der spiralförmig verlaufende Produktfaden einen im Wesentlichen nicht komprimierbaren Querschnitt aufweist.

4. Garn nach Anspruch 1 oder 2 mit einem Querschnitt, der während des Betriebseinsatzes formbeständig ist.

5. Garn nach Anspruch 1 oder 2, dessen geflochtene Ummantelung (398) in der Lage ist, während des Arbeitseinsatzes seine Form zu erhalten.

6. Garn nach Anspruch 1 oder 2, bei dem der spiralförmig verlaufende Produktfaden (36) einen Querschnitt hat, der während des Arbeitseinsatzes die Form erhalten kann.

7. Garn nach Anspruch 1 oder 2, mechanisch an einem anderen Gegenstand durch eine Klammer befestigt.

8. Garn nach Anspruch 1 oder 2, bei dem in dem Garn zur Befestigung des Garns an einem anderen Gegenstand eine Schlaufe gebildet ist, bestehend aus zwei Segmenten des Garns, die mechanisch aneinander mittels einer Klammer fixiert sind.

9. Verbessertes Verfahren zum Fangen von Fisch mit einem Schleppnetzsystem, umfassend folgende Schritte:
a. Zusammensetzen des Schleppnetzsystems durch Kombinieren von Komponenten, die ausgewählt sind aus einer Gruppe, bestehend aus einem Schleppnetr, oberen Hahnepots und Frontseiten, wobei das Schleppnetz mehrere Maschenzellen enthält, von denen jede Maschenzelle mindestens drei Maschenstege (35, 283) enthält;
i. mindestens ein erster Abschnitt von mindestens einem ersten Maschensteg in mindestens einer der Maschenzellen ist **dadurch gekennzeichnet, dass** er
einen ersten Produktfaden enthält, bei dem es sich um ein Garn nach einem der Ansprüche 1 bis 8 handelt und der einen Kern-Produktfaden (37) enthält, der sich in einer Ummantelung (398) befindet, die einem Gleiten entlang dem Kern-Produktfaden (37) während des Zusammensetzens und während des Arbeitseinsatzes des Schleppnetzes Widerstand entgegensetzt; und
ii. eine mechanische Verbindung koppelt den ersten Produktfaden, welcher den ersten Maschensteg bildet, mit einem zweiten Produktfaden, der einen zweiten Maschensteg mindestens einer Maschenzelle bildet, wobei die mechanische Verbindung **gekennzeichnet ist durch** eine Klammer, die einen Abschnitt von mindestens dem ersten Produktfaden umschließt; und
b. von einem auf der Oberfläche eines Gewässers befindlichen Schiff aus:
i. Aussetzen des ummantelten ersten Maschenstegs als Teil des Schleppnetzsystems in das Gewässer; und
ii. Vortreiben von zumindest dem ummantelten ersten Maschensteg **durch** das Gewässer.

10. Verfahren nach Anspruch 9, bei dem der gleitresistente, ummantelte Abschnitt des ersten Produktfadens weiterhin **dadurch gekennzeichnet ist, dass**
die Ummantelung mit mehreren Produktfäden (397) ausgebildet ist, die den Kern-Produktfaden (37) umgeben und außerdem einen kleineren Durchmesser als diese besitzen, wobei mindestens einige der umgebenden Produktfäden (397), die sich innerhalb der Klammer befinden, **dadurch gekennzeichnet sind, dass** sie ausreichend dicht gewoben sind, damit die Ummantelung einer Relativbewegung gegenüber dem Kern-Produktfaden Widerstand leistet.

11. Verfahren nach Anspruch 9, bei dem der gleitresistente, ummantelte Abschnitt des ersten Produktfadens weiterhin **dadurch gekennzeichnet ist,**
**dass** die Ummantelung mit mehreren Produktfäden (397) ausgebildet ist, die den Kern-Produktfaden (37) sowohl umgeben als auch einen kleineren Durchmesser als diese haben, wobei mindestens einige der umgebenden Produktfäden (397), die sich innerhalb der Klammer befinden, zusätzlich **dadurch gekennzeichnet sind, dass** sie ausreichend dicht verwoben sind, damit die Ummantelung eine Querschnittsform des gleitresistenten ummantelten Abschnitts des ersten Produktfadens während des Arbeitseinsatzes beibehält.

12. Verfahren nach Anspruch 9, 10 oder 11, bei dem die Verbindung des ersten Produktfadens mit dem zweiten Maschensteg die Ausbildung einer ersten Schlaufe durch Zusammenklemmen von zwei Segmenten des ersten Produktfadens beinhaltet.

13. Verfahren nach Anspruch 12, bei welchem die Verbindung des ersten Produktfadens mit dem zweiten Maschensteg die Bildung einer zweiten Schlaufe am Ende des zweiten Produktfadens beinhaltet, wobei die zweite Schlaufe durch die erste Schlaufe hindurchgeht.

14. Verfahren nach Anspruch 9, 10, 11, 12 oder 13, bei dem der Kern-Produktfaden mit im Wesentlichen minimalem Restmoment gebildet ist.

15. Verfahren nach Anspruch 9, 10, 11, 12 oder 13, bei dem der gleitresistente Ummantelungsabschnitt des ersten Produktfadens mit im Wesentlichen minimalem Restmoment gebildet ist.

## Revendications

1. Fil qui comprend une gaine encerclante tressée (398) et une âme (37), la gaine étant **caractérisée en ce qu'**elle présente :
a. une pluralité de torons de produit encerclants (397), chacun ayant un diamètre inférieur au diamètre du toron de produit de l'âme (37) du fil ; et
b. au moins un toron de produit en spirale (36) entrelacé avec les torons de produit encerclants (397) et ayant un diamètre qui est supérieur au diamètre de chacun des torons de produit encerclants (397) et est inférieur au diamètre du toron de produit de l'âme (37).

2. Fil selon la revendication 1, dans lequel le fil a une section transversale sensiblement incompressible.

3. Fil selon la revendication 1 ou 2, dans lequel le toron de produit en spirale a une section transversale sensiblement incompressible.

4. Fil selon la revendication 1 ou 2, dans lequel le fil a une section transversale capable de conserver une forme pendant les opérations d'écran.

5. Fil selon la revendication 1 ou 2, dans lequel la gaine tressée (398) est capable de conserver sa forme pendant les opérations d'écran.

6. Fil selon la revendication 1 ou 2, dans lequel le toron de produit en spirale (36) a une section transversale capable de conserver une forme pendant les opérations d'écran.

7. Fil selon la revendication 1 ou 2, dans lequel le fil est fixé mécaniquement à un autre objet par une bride.

8. Fil selon la revendication 1 ou 2, dans lequel une boucle est formée dans le fil afin de fixer le fil à un autre objet, la boucle étant formée par deux segments du fil qui sont fixés mécaniquement l'un à l'autre par une bride.

9. Procédé amélioré destiné à prendre du poisson avec un système de chalut comprenant les étapes :
a. assembler le système de chalut en combinant des composants choisis dans le groupe constitué par un chalut, des brides supérieures et des cordes avant, le chalut comprenant une pluralité de cellules formant maille, chaque cellule formant maille comprenant au moins trois barres de maille (35, 283) :
i. au moins une partie d'au moins une première barre de maille dans au moins l'une des cellules formant maille **caractérisée en ce qu'**elle comprend un premier toron de produit étant un fil selon l'une quelconque des revendications 1 à 8 et ayant un toron de produit formant âme (37) renfermé à l'intérieur d'une gaine (398) qui résiste au glissement le long du toron de produit formant âme (37) lors de l'assemblage et des opérations d'écran du chalut ; et
ii. un raccord mécanique assemble le premier toron de produit formant la première barre de maille à un second toron de produit formant une seconde barre de maille de la au moins une cellule formant maille, le raccord mécanique étant **caractérisé par** une bride qui comprend une partie d'au moins le premier toron de produit ; et
b. à partir d'un bateau situé sur une surface d'eau :
i. déployer dans l'eau en tant que partie du système de chalut la première barre de maille gainée ; et
ii. pousser au moins la première barre de maille gainée dans l'eau.

10. Procédé amélioré destiné à prendre du poisson selon la revendication 9, dans lequel la partie gainée résistant au glissement du premier toron de produit est en outre **caractérisée en ce que** :
la gaine est constituée d'une pluralité de torons de produit (397) qui encerclent à la fois et présentent un diamètre inférieur au toron de produit de l'âme, au moins plusieurs des torons de produit encerclants (397) qui sont disposés à l'intérieur de la bride étant en outre **caractérisés par** le fait d'être tissés de manière suffisamment dense pour que la gaine résiste à tout mouvement par rapport au toron de produit de l'âme.

11. Procédé amélioré destiné à prendre du poisson selon la revendication 9, dans lequel la partie gainée résistant au glissement du premier toron de produit est en outre **caractérisée en ce que** :
la gaine est constituée d'une pluralité de torons de produit (397) qui encerclent à la fois et présentent un diamètre inférieur au toron de produit de l'âme (37), au moins plusieurs des torons de produit encerclants (397) qui sont disposés à l'intérieur de la bride étant en outre **caractérisés par** le fait d'être tissés de manière suffisamment dense pour que la gaine conserve une forme de section transversale de la partie gainée résistant au glissement du premier toron de produit pendant des opérations d'écran.

12. Procédé amélioré destiné à prendre du poisson selon la revendication 9, 10 ou 11, dans lequel l'assemblage du premier toron de produit à la seconde barre de maille comprend la formation d'une première boucle en bridant ensemble deux segments du premier toron de produit.

13. Procédé amélioré destiné à prendre du poisson selon la revendication 12, dans lequel l'assemblage du premier toron de produit à la seconde barre de maille comprend la formation d'une seconde boucle à une extrémité du second toron de produit, et dans lequel la seconde boucle passe à travers la première boucle.

14. Procédé amélioré destiné à prendre du poisson selon la revendication 9, 10, 11, 12 ou 13, dans lequel le toron de produit de l'âme est formé avec un couple résiduel sensiblement minimum.

15. Procédé amélioré destiné à prendre du poisson selon la revendication 9, 10, 11, 12 ou 13, dans lequel la partie gainée, résistant au glissement du premier toron de produit est formée avec un couple résiduel sensiblement minimum.
